(19) Europäisches Patentamt
European Patent Office
Office européen des brevets

(11) EP 4 696 765 A1

(12) **EUROPEAN PATENT APPLICATION**
published in accordance with Art. 153(4) EPC

(43) Date of publication:
**18.02.2026 Bulletin 2026/08**

(21) Application number: **24788680.7**

(22) Date of filing: **05.04.2024**

(51) International Patent Classification (IPC):
*C12G 3/04* (2019.01)    *A23L 5/00* (2016.01)
*A23L 19/00* (2016.01)

(52) Cooperative Patent Classification (CPC):
**A23L 5/00; A23L 19/00; C12G 3/04**

(86) International application number:
**PCT/JP2024/014166**

(87) International publication number:
**WO 2024/214656 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023 JP 2023063312**

(71) Applicant: **Suntory Holdings Limited
Osaka-shi, Osaka 530-8203 (JP)**

(72) Inventors:
• **SHIBA, Keisuke
Soraku-gun, Kyoto 619-0284 (JP)**
• **SEIKI, Hiroshi
Kawasaki-shi, Kanagawa 211-0067 (JP)**

(74) Representative: **Vossius & Partner
Patentanwälte Rechtsanwälte mbB
Siebertstraße 3
81675 München (DE)**

(54) **METHOD FOR PRODUCING FROZEN MICRO-GROUND IMMERSION ALCOHOL**

(57)    The objective of the present invention is to reduce off-flavors that occur in an immersion liquid obtained when a relatively low alcohol content is used in an alcohol immersion step of a method for producing a frozen micro-ground immersion alcohol. In the present invention, the alcohol content of the obtained immersion liquid is increased.

EP 4 696 765 A1

**Description**

TECHNICAL FIELD

The present invention relates to a method for producing a freeze-fine-crush-infusion liquor, specifically a method including subjecting a fruit and/or vegetable used as a source material to a freezing step, a fine crushing step, and an alcohol infusion step.

BACKGROUND ART

Methods for producing a freeze-fine-crush-infusion liquor from a source material such as a fruit or a vegetable are known. For example, PTL 1 and PTL2 disclose a method for obtaining an infusion liquid by subjecting the source material to a freezing step, a fine crushing step, and an alcohol infusion step. It is known that the infusion liquid thus obtained has the fragrance and flavor of the source material as it is and better fragrance and flavor than ever before and is suitable for producing a beverage or food.

CITATION LIST

PATENT LITERATURE

PTL 1: International Patent Publication No. WO 2006/009252
PTL 2: International Patent Publication No. WO 2007/083812

SUMMARY OF INVENTION

TECHNICAL PROBLEM

The present inventors have further studied the method for producing a freeze-fine-crush-infusion liquor to find that employing a relatively low alcohol content in an alcohol infusion step has an advantage of improving the thickness of the taste of the resulting infusion liquid. However, such an alcohol content also imparts an odd taste to the infusion liquid.
Here, the thickness of the taste of the infusion liquid means the body and the sensation of a mass that passes down the throat, which are felt when the infusion liquid is ingested. In addition, the odd taste of the infusion liquid means the complex aftertaste felt upon ingestion of the infusion liquid, which may be unacceptable depending on the consumers' preference and the situation of drinking.
An object of the present invention is to reduce the odd taste that occurs in an infusion liquid when a relatively low alcohol content is employed in an alcohol infusion step in a method for producing a freeze-fine-crush-infusion liquor.

SOLUTION TO PROBLEM

The present inventors have conducted diligent studies to find that the above problem can be solved when an alcohol is added to the infusion liquid after the infusion step to increase the alcohol content.
Accordingly, the present invention relates to, but is not limited to, the following.

[1] A method for producing a beverage or food, the method including:

step (a) of freezing at least one fruit and/or vegetable used as a source material to obtain frozen product;
step (b) of finely crushing the frozen product to obtain a freeze-finely-crushed product ;
step (c) of infusing the finely-crushed product, as it is or after thawed into a paste form, in an aqueous liquid containing 20%v/v or less of an alcohol to obtain an infusion liquid; and
step (d) of adding an alcohol to the infusion liquid to increase the alcohol content of the infusion liquid to obtain an alcohol-adjusted liquid.

[2] The method according to [1], wherein in step (d), the alcohol content of the infusion liquid is increased by 1%v/v or more.
[3] The method according to [1] or [2], wherein the fruit and/or vegetable used as a source material is at least one selected from citrus fruits.

[4] The method according to any one of [1] to [3], wherein the infusion in step (c) is performed at 40°C or higher.

[5] The method according to any one of [1] to [4], wherein the liquid during the infusion in step (c) has a pH of less than 4.0.

[6] A method for reducing an odd taste in a beverage or food, the method including:

step (a) of freezing at least one fruit and/or vegetable used as a source material to obtain frozen product;

step (b) of finely crushing the frozen product to obtain a freeze-finely-crushed product ;

step (c) of infusing the finely-crushed product, as it is or after thawed into a paste form, in an aqueous liquid containing 20%v/v or less of an alcohol to obtain an infusion liquid; and

step (d) of adding an alcohol to the infusion liquid to increase the alcohol content of the infusion liquid to obtain an alcohol-adjusted liquid.

ADVANTAGEOUS EFFECTS OF INVENTION

The present invention can improve a method for producing a freeze-fine-crush-infusion liquor. Specifically, it is possible to reduce an odd taste that occurs in an infusion liquid obtained when a relatively low alcohol content is employed in an alcohol infusion step in the production method. As a result of this, an infusion liquid having excellent thickness of taste and having a reduced odd taste can be obtained, which can contribute production of a beverage or food having an excellent taste.

DESCRIPTION OF EMBODIMENTS

In a production method of the present invention, a beverage or food is produced from one or more of fruits and/or vegetables as source materials through a freezing step, a fine crushing step, an alcohol infusion step, and an alcohol content adjustment step, and, if necessary, a mixing step. Hereinafter, the production method will be described.

The term "alcohol" described herein means ethanol unless otherwise noted.

(Freezing Step)

In the production method of the present invention, a step of freezing at least one fruit and/or vegetable used as a source material to obtain frozen product is first performed.

At a freezing step, the fruit and/or vegetable used as a source material is frozen and solidified. The type of a freezer and the freezing method used for freezing are not limited. Any of air freezing, air blast breezing, contact freezing, brine freezing, and liquid nitrogen freezing can be used. A preferred freezing method is liquid nitrogen freezing. The temperature of liquid nitrogen is -196°C. The temperature used for freezing is preferably equal to or below the brittle temperature for a fruit or vegetable used as a source material. As referred to herein, the term "brittle temperature" refers to a temperature at which an object becomes suddenly brittle (becomes brittle and easily fractured) due to low temperature. The brittle temperature can be determined by applying a conventional method performed for polymers.

The size of a fruit or vegetable subjected to a freezing step is not limited, as long as it is small enough to be put into a freezer.

However, in order to achieve freezing in as short a time as possible, it may be better to cut a fruit or vegetable into small pieces. In order to freeze a fruit or vegetable without being damaged or exposed to air as much as possible, it may be better not to cut it into too small pieces. A whole fruit or vegetable, including pericarps and seeds, may be subjected to a freezing step, or a fruit or vegetable may be subjected to a freezing step after some parts containing non-edible parts and unfavorable components have been removed. Removal of such parts may be done after the freezing step. By taking the freezing step, a frozen product of a fruit or vegetable can be obtained.

Examples of the source material fruits include, but are not limited to, citrus fruits (oranges such as Valencia oranges and navel orange; grapefruits such as grapefruit; flavorful acid citruses such as lemon, lime, flat lemon, sour orange, *Citrus junos, Citrus sphaerocarpa, Citrus sudachi,* citron, and fingered citron; miscellaneous citruses such as *Citrus natsudaidai, Citrus hassaku, Citrus tamurana,* sweetie, and Siranuhi; buntans such as *Citrus iyo* and *Citrus tankan;* tangerine oranges such as mandarin oranges, *Citrus unshiu, Citrus reticulata var poonensis,* and *Citrus kinokuni;* and kumquats such as *Citrus japonica*), apple, grape, peach, tropical fruits (pineapple, guava, banana, mango, acerola, lychee, papaya, passion fruit, and the like), other fruits (*Prunus mume,* Japanese pear, apricot, *Prunus salicina,* berry, kiwi fruit, and the like), a strawberry, and melon. These fruits may be used alone or in combination of two or more. The fruit is preferably a citrus fruit, more preferably selected from the group consisting of oranges, grapefruits, and flavorful acid citruses, more preferably selected from the group consisting of orange, grapefruit, lemon, and a lime, more preferably lemon.

Except in special cases, examples of the source material vegetables include leaf and stem vegetables, fruit vegetables (excluding those handled as fruits on the market), flower vegetables, root vegetables, beans, and edible plant seeds. Other examples thereof include perilla, ginger, chili pepper, herbs (e.g., mint, lemongrass, coriander, Italian parsley and rosemary)), and Japanese horseradish. Preferred examples of vegetables are tomato, celery, carrot, parsley, spinach, watercress, sweet pepper, lettuce, cabbage, beet, ginger (root ginger, leaf ginger), and perilla (blue perilla, red perilla).

The following provides descriptions of the production method of the present invention by citing a fruit as an example, but such descriptions shall also apply to the production method of the present invention of a vegetable, except in special cases.

Except in special cases, the term "fruit" or "vegetable", as referred to herein with respect to a source material, refers to a whole raw fruit or vegetable, including a juice and solid matters, or refers to a portion thereof, and is distinguished from the "fruit juice" or "vegetable juice". Further, except in special cases, the term "fruit juice" or "vegetable juice", as used herein, refers to a fruit or vegetable juice preliminarily obtained by pressing or other processes, and does not include a fruit and/or vegetable juice which is to be contained in the final product or the like as a result of using a whole fruit and/or vegetable as a source material.

(Fine Crushing Step)

Subsequently, the frozen product is finely crushed to obtain a freeze-finely-crushed product.

The type of a crusher and the fine crushing method used for this step are not limited. It is preferred to perform fine crushing at low temperatures, preferably under frozen conditions with the use of liquid nitrogen, such that the frozen product can be kept in a solidified state. The temperature of liquid nitrogen is -196°C. The extent of fine crushing is not particularly limited. The fine crushing is performed until the finely-crushed product obtained has an average particle diameter of preferably from about 1 $\mu$m to about 1000 $\mu$m, more preferably from 1 $\mu$m to about 200 $\mu$m, still more preferably from 1 $\mu$m to about 100 $\mu$m. As referred to herein, the "average particle diameter" refers to a median diameter (a particle diameter at 50% of a cumulative oversize distribution curve; also referred to as "median size" or "50% particle size"). By taking the fine crushing step, a freeze-finely-crushed product of a fruit and/or vegetable can be obtained.

(Alcohol Infusion Step)

Subsequently, the freeze-finely-crushed product is infused as it is or after thawed into a paste form, in an aqueous liquid containing 20%v/v or less of an alcohol to obtain an infusion liquid.

The aqueous liquid containing 20%v/v or less of an alcohol is a mixed liquid of water and alcohol as solvents, and other ingredients may be further contained in the mixed liquid as long as the amount is small (for example, 20%v/v or less). The alcohol content of the aqueous liquid is preferably 1 to 20%v/v, more preferably 1 to 15%v/v, even more preferably 5 to 15%v/v. When such an alcohol content is employed, the thickness of the taste of the resulting infusion liquid is improved.

The aqueous liquid includes distilled liquors, brewed liquors, dilutions thereof, and mixtures thereof. In this step, the aqueous liquid is preferably a distilled liquor or a dilution thereof. Examples of the distilled liquors include spirits (rum, vodka, gin, tequila, neutral spirits, and the like), liqueurs, whiskey, brandy, or shochu, and examples of the brewed liquors include beer and wine. These can be used singly or in combination.

The infusion temperature is not particularly limited but is, for example, 0°C or higher, 20°C or higher, or 40°C or higher. When the infusion temperature is 40°C or higher, the thickness of the taste of the resulting infusion liquid is further enhanced. Here, the infusion temperature means a liquid temperature during the infusion. The upper limit value of the temperature is not important but is, for example, equal to or lower than the boiling point of the solvent, or 60°C or lower. Accordingly, a preferred infusion temperature is 0°C or higher and equal to or lower than the boiling point of the solvent, 20°C or higher and equal to or lower than the boiling point of the solvent, or 40°C or higher and equal to or lower than the boiling point of the solvent.

The pH of the liquid during the infusion is not particularly limited, but is, for example, lower than 4.0, or 2.8 or lower. When such a pH is employed, the thickness of the taste of the resulting infusion liquid is further enhanced. The lower limit value of the pH is not particularly limited but is about 2.0. Accordingly, the range of a preferred pH is 2.0 or more and lower than 4.0, or 2.0 to 2.8.

In addition, the immersion period is not limited, and is typically in the range of from about 10 hours to several months, or about half a day to about three days, or said period may be several months.

The ratio of the freeze-finely-crushed product to the aqueous liquid in the infusion step is not limited but is typically about 1 g to about 500 g, about 5 g to about 300 g, or about 10 g to about 200 g of the freeze-finely-crushed product is used based on 1 L of the aqueous liquid.

Through the infusion step, the infusion liquid is obtained. The infusion liquid may be used as it is in the next step or may be used in the next step after removing the solid matters through a solid matter separation method such as filtration.

The alcohol content in the beverage or the aqueous liquid herein can be measured by any known method, for example, with a vibrating densitometer. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007). Alternatively, gas chromatography or HPLC may be used.

(Alcohol Content Adjustment Step)

Subsequently, an alcohol is added to the infusion liquid to increase the alcohol content of the infusion liquid to obtain an alcohol-adjusted liquid. In this step, an odd taste of the infusion liquor is reduced.

The alcohol content is preferably increased by 1 v/v or more, more preferably 5%v/v or more, more preferably 10%v/v or more. The upper limit value of the amount of the alcohol content increased is not limited but is, for example, 10% v/v or 20%v/v. Accordingly, a preferred range of the alcohol content increase is, for example, 1 to 20%v/v, 5 to 20%v/v, or 10 to 20%v/v.

"Adding an alcohol" to increase the alcohol content includes not only adding the alcohol itself but also adding a liquid containing the alcohol in a relatively high content. An example of such a liquid is an alcohol-containing aqueous liquid, and this is the same as an aqueous liquid containing 20%v/v or less of an alcohol excluding the alcohol content. Accordingly, the alcohol-containing liquid may be a distilled liquor or a brewed liquor. Preferably, the alcohol-containing aqueous liquid is a distilled liquor or a dilution thereof, and the examples of the distilled liquor or a dilution thereof are as described above in the infusion step.

The temperature of this step is not limited as long as heat is applied. The time is also not limited.

The resulting alcohol-adjusted liquid may be stored for a certain period of time, for example, from 1 hour to 10 weeks, from 1 day to 10 weeks, or from 1 week to 3 weeks. The storage temperature is not limited as long as the alcohol-adjusted liquid is not heated but is typically room temperature, 25°C or lower, 10°C or lower, or 5°C or lower.

(Mixing Step)

The alcohol-adjusted liquid may be utilized as a food or beverage as it is, but a beverage or food may be produced by mixing the alcohol-adjusted liquid with other source materials as needed.

Examples of other source materials that are used in the method of the present invention include a fruit juice. The content of the fruit juice in a beverage or food obtained by the method of the present invention is not particularly limited but is, for example, less than 8.0%v/v in terms of percent fruit juice content. The lower limit value of the percent fruit juice content is not particularly important.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded.

Percent fruit juice content (%w/w) = <Amount of fruit juice added (g)> $\times$ <concentration factor>/100 mL/<density of beverage> $\times$ 100

When the beverage of the present invention contains a fruit juice, the fruit juice may be in any form of straight juice, which is fruit juice squeezed from fruits to be used as it is, concentrated juice, which is obtained by concentrating the straight juice, and the like. Transparent fruit juice or cloudy fruit juice can also be used. Whole fruit juice, obtained by crushing whole fruits including the skins and removing only particularly coarse hard solid matter such as seed therefrom, fruit puree, obtained by straining fruits, or fruit juice into which the pulp of dried fruits is crushed or that is extracted from the pulp can also be used.

The type of fruit to be a source material for the fruit juice is not particularly limited but, for example, a fruit juice obtained from the fruits described above with respect to the freezing step can be used.

The beverage may contain a vegetable juice. The description with respect to the above fruit juice also applies mutatis mutandis to the vegetable juice appropriately.

In addition, examples of other source materials include carbonic acid gas. The carbonic acid gas can be added to the beverage by a method usually known to persons skilled in the art, and, for example, carbon dioxide may be dissolved in the beverage under pressure, carbon dioxide and the beverage may be mixed in piping using a mixer such as Carbonator from GEA Tuchenhagen GmbH, carbon dioxide may be absorbed into the beverage by spraying the beverage in a tank filled with carbon dioxide, or the beverage and soda water may be mixed, although the method is not limited to these. The carbonic acid gas pressure is adjusted by appropriately using these methods.

When the beverage contains carbonic acid gas in the present invention, the carbonic acid gas pressure is not particularly limited but is preferably 0.7 to 4.5 $kgf/cm^2$, more preferably 0.8 to 2.8 $kgf/cm^2$. In the present invention, the carbonic acid gas pressure can be measured using Gas Volume Analyzer GVA-500A manufactured by Kyoto Electronics Manufacturing Co., Ltd. For example, the sample temperature is set at 20°C, the gas in the air inside the container of the Gas Volume Analyzer is removed (snifting), shaking is performed, and then the carbonic acid gas pressure is measured. The carbonic acid gas pressure herein means a carbonic acid gas pressure at 20°C unless otherwise noted.

Examples of other source materials include various additives. That is, various additives may be added to the beverage or food obtained by the production method of the present invention as well as usual beverages or foods within a range where the effects of the present invention are not impaired. Examples of the various additives include acidulant, flavoring, vitamin, pigment, antioxidant, emulsifier, preservative, seasoning, extract, pH adjustor, thickener, and quality stabilizer.

(Beverage or Food)

The type of the beverage obtained by the method of the present invention is not particularly limited and includes liquors, soft drinks, fruit drinks, and health drinks. The beverage is preferably a highball, a shochu liquor mixed with soda water (chu-hai in Japanese), a cocktail, a sour, or the like. The terms "highball" and "shochu liquor mixed with soda water," when used in relation to the beverage of the present invention, refer to a beverage containing water, a distilled liquor, and carbonic acid. The highball and the shochu liquor mixed with soda water may further contain a fruit juice. In addition, the term "sour," when used in relation to the beverage of the present invention, means a beverage containing a spirit, a sour juice or flavoring, such as, for example, a citrus juice or flavoring, and carbonic acid. The term "cocktail," when used in relation to the beverage of the present invention, means an alcoholic beverage made by mixing a fruit juice or the like with a base liquor.

The types of food obtained by the method of the present invention are not particularly limited and include processed foods. Examples of such foods include jam, jelly, ice cream, yogurt, gum, cake, and salad.

(Other Steps)

To the production method of the present invention, other steps in addition to the step described above may be added as long as the effects are not impaired.

For example, the alcohol-adjusted liquid is mixed with other source materials as needed and then can be packed in a container. The forms of containers include metal containers such as a can, PET bottles, paper packs, bottles, pouches, and the like, but are not limited thereto. Furthermore, a sterilization step can be performed in one or more of before, during, and after the packing step.

(Related Method)

The production method of the present invention can reduce an odd taste in a beverage or food. Accordingly, the production method of the present invention is a method of reducing an odd taste in a beverage or food in one aspect.

(Numerical Value Ranges)

For clarification, the numerical value ranges herein include their endpoints, i.e., the lower limit values and upper limit values.

EXAMPLES

Hereinafter, the present invention will be described in more detail with reference to specific experimental examples, but the present invention is not limited to the following experimental examples.

(Experiment 1) Effects of Infused Alcohol Content

As a source material fruit, a raw lemon fruit was used. The lemon fruit was frozen using liquid nitrogen at -196°C. Subsequently, the resulting frozen product was put into a freezer crusher (Linrex Mill: Liquid Gas Co., Ltd.) and finely crushed in a frozen state to obtain a white powdery, freeze-finely-crushed product having a particle size of about 30 μm. To measure the particle size, the method described in Examples of PTL 1 was employed. Subsequently, the freeze-finely-crushed product obtained was infused in aqueous alcohol liquids (infusion liquid) having various alcohol contents at 20°C for 15 hours, and the solid matters were removed from the resulting liquids by filtration using diatomaceous earth to obtain infusion liquids. The aqueous alcohol liquids used were mixed liquids of water and neutral spirits.

Next, each infusion liquid was subjected to sensory evaluations by four expert panelists with respect to the thickness of the taste and the odd taste to determine the average values of the scores. In all the items, a higher score indicates a better result.

Specifically, with respect to the thickness, score 1 indicates that the thickness is the smallest, and score 5 indicates that the thickness is the largest. With respect to the odd taste, score 1 indicates that the odd taste is the highest, and score 5 indicates that the odd taste is the lowest.

In order to reduce individual differences in the evaluations, the panelists established common recognition of the relationship between each score and the taste in advance using a standard product corresponding to each score.

These evaluation criteria and evaluation method were used in the other experiments.

The alcohol content used for preparation of each the infusion liquids and the sensory evaluation results are as shown in the following table.

[Table 1]

| Alcohol content (%v/v) of infusion liquid | 30 | 25 | 20 | 10 | 1 |
|---|---|---|---|---|---|
| Thickness | 1.5 | 2.8 | 3.5 | 5.0 | 4.8 |
| Odd taste | 1.5 | 2.0 | 3.3 | 3.3 | 3.0 |

As is clear from the table above, when the alcohol content was equal to or lower than a certain level, the thickness of the taste was enhanced, but the problem of the odd taste was remarkable.

(Experiment 2) Effects of Alcohol Content Adjustment

Various amounts of neutral spirits and water were added to the infusion liquid obtained using the aqueous alcohol liquid having an alcohol content of 10%v/v in Experiment 1 to increase the alcohol content and a plurality of alcohol-adjusted liquids were obtained. The adjusted liquids obtained were stored in a refrigerator for a period of about 1 week and then subjected to the same sensory evaluations as in Experiment 1. The results are shown below. For comparison, a part of the data of Experiment 1 is also shown below (Increase in alcohol content "0"%v/v).

[Table 2]

| Increase in alcohol content (%v/v) | 20 | 10 | 5 | 0 |
|---|---|---|---|---|
| Thickness | 5.0 | 5.0 | 5.0 | 5.0 |
| Odd taste | 5.0 | 4.5 | 4.0 | 3.3 |

When the alcohol content of the infusion liquid was increased, the odd taste was reduced.

(Experiment 3) Relationship between Odd Taste Reducing Effect and Alcohol Content during Infusion

The alcohol content of some alcohol infusion liquids (1%v/v and 20%v/v) obtained in Experiment 1 was increased in the same manner as in Experiment 2 to obtain alcohol-adjusted liquids, and the resulting adjusted liquids were subjected to the same sensory evaluations as in Experiment 1. In all cases, the alcohol content was increased by 5%v/v. The alcohol content of the infusion liquids and the evaluation results are shown below.

[Table 3]

| Alcohol content (%v/v) of infusion liquid | 20 | 1 |
|---|---|---|
| Thickness | 3.5 | 4.8 |
| Odd taste | 4.3 | 4.0 |

Comparison with the results in Table 1 revealed that the effect of the alcohol content adjustment step was obtained even when the alcohol content during the alcohol infusion was changed.

**Claims**

1. A method for producing a beverage or food, the method comprising:

   step (a) of freezing at least one fruit and/or vegetable used as a source material to obtain frozen product;
   step (b) of finely crushing the frozen product to obtain a freeze-finely-crushed product;
   step (c) of infusing the finely-crushed product, as it is or after thawed into a paste form, in an aqueous liquid containing 20%v/v or less of an alcohol to obtain an infusion liquid; and
   step (d) of adding an alcohol to the infusion liquid to increase the alcohol content of the infusion liquid to obtain an alcohol-adjusted liquid.

2. The method according to claim 1, wherein in step (d), the alcohol content of the infusion liquid is increased by 1%v/v or more.

3. The method according to claim 1 or 2, wherein the fruit and/or vegetable used as a source material is at least one selected from citrus fruits.

4. The method according to any one of claims 1 to 3, wherein the infusion in step (c) is performed at 40°C or higher.

5. The method according to any one of claims 1 to 4, wherein the liquid during the infusion in step (c) has a pH of less than 4.0.

6. A method for reducing an odd taste in a beverage or food, the method comprising:

   step (a) of freezing at least one fruit and/or vegetable used as a source material to obtain frozen product;
   step (b) of finely crushing the frozen product to obtain a freeze-finely-crushed product;
   step (c) of infusing the finely-crushed product, as it is or after thawed into a paste form, in an aqueous liquid containing 20%v/v or less of an alcohol to obtain an infusion liquid; and
   step (d) of adding an alcohol to the infusion liquid to increase the alcohol content of the infusion liquid to obtain an alcohol-adjusted liquid.

## INTERNATIONAL SEARCH REPORT

| International application No. |
|---|
| **PCT/JP2024/014166** |

### A. CLASSIFICATION OF SUBJECT MATTER

*C12G 3/04*(2019.01)i; *A23L 5/00*(2016.01)i; *A23L 19/00*(2016.01)i
FI: C12G3/04; A23L5/00 H; A23L19/00 A

According to International Patent Classification (IPC) or to both national classification and IPC

### B. FIELDS SEARCHED

Minimum documentation searched (classification system followed by classification symbols)

C12G3/04; A23L5/00; A23L19/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-136658 A (SUNTORY HOLDINGS LTD.) 24 June 2010 (2010-06-24) example 3 | 1-6 |
| Y | JP 2015-116187 A (SUNTORY HOLDINGS LTD.) 25 June 2015 (2015-06-25) example 7 | 1-6 |
| Y | JP 2015-91268 A (KYOYA DISTILLER & BREWER CO., LTD.) 14 May 2015 (2015-05-14) paragraphs [0006], [0018], examples | 1-6 |
| Y | JP 2000-60530 A (AIYU SHUZO KK) 29 February 2000 (2000-02-29) paragraph [0003], example 3 | 1-6 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/014166**

| Patent document cited in search report | | | Publication date (day/month/year) | Patent family member(s) | Publication date (day/month/year) |
|---|---|---|---|---|---|
| JP | 2010-136658 | A | 24 June 2010 | (Family: none) | |
| JP | 2015-116187 | A | 25 June 2015 | (Family: none) | |
| JP | 2015-91268 | A | 14 May 2015 | (Family: none) | |
| JP | 2000-60530 | A | 29 February 2000 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006009252 A

- WO 2007083812 A

**Non-patent literature cited in the description**

- *National Tax Agency Directive*, 22 June 2007 (6)